(19) Europäisches Patentamt / European Patent Office / Office européen des brevets

(11) **EP 2 767 529 B1**

(12) **EUROPEAN PATENT SPECIFICATION**

(45) Date of publication and mention
of the grant of the patent:
**06.06.2018 Bulletin 2018/23**

(51) Int Cl.:
**C04B 41/85** *(2006.01)*  **C04B 41/89** *(2006.01)*
**F16D 69/02** *(2006.01)*

(21) Application number: **14154515.2**

(22) Date of filing: **10.02.2014**

(54) **Formulations and methods for oxidation protection of composite articles**

Formulierungen und Verfahren zum Oxidationsschutz von Verbundgegenständen

Formulations et procédés pour la protection contre l'oxydation d'articles composites

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.02.2013 US 201313766459**

(43) Date of publication of application:
**20.08.2014 Bulletin 2014/34**

(73) Proprietor: **Goodrich Corporation**
**Charlotte, NC 28217-4578 (US)**

(72) Inventor: **Mazany, Anthony M.**
**Amelia Island, FL 32034 (US)**

(74) Representative: **de Bresser, Sara Jean et al**
**Dehns**
**St Bride's House**
**10 Salisbury Square**
**London EC4Y 8JD (GB)**

(56) References cited:
**EP-A2- 2 243 760**

**Description**

BACKGROUND

The described subject matter relates generally to composite materials and more specifically to oxidation protection systems and coatings for composite materials.

Phosphate-based oxidation protection systems (OPS) for carbon-carbon composites (carbon fiber in carbon matrix) have been developed for use in aircraft wheel brakes, among other applications. These OPS include a surface pretreatment and/or a phosphate glass barrier to reduce infiltration of oxygen and oxidation catalysts (e.g. K and Na) into the composite. The catalysts accelerate oxidation of the composite part under even modestly elevated temperatures. Even with existing OPS, catalytic oxidation losses still represent a substantial portion of total (thermal + catalytic) oxidation losses, requiring premature maintenance and repair to the braking system.

SUMMARY

A composition comprises a carrier fluid, precursors of a phosphate glass, and a first plurality of dispersed filler nanoparticles having a mean aspect ratio of at least about 100. At least some of the first plurality of filler nanoparticles comprise graphene nanoplatelets (GNPs), which typically have a mean thickness measuring less than about 20 nm, for example a mean thickness measuring between about 4 nm and about 8 nm.

An article comprises a carbon-carbon composite substrate and an oxidation protection coating. The oxidation protection coating includes a phosphate glass barrier layer. A first plurality of filler nanoparticles dispersed through at least a portion of the phosphate glass barrier layer have a mean aspect ratio of at least about 100. At least some of the first plurality of filler nanoparticles comprise graphene nanoplatelets (GNPs), which typically have a mean thickness measuring less than about 20 nm, for example a mean thickness measuring between about 4 nm and about 8 nm.

In a method for limiting a catalytic oxidation reaction in a composite substrate, an oxidation inhibiting composition is applied to a surface of a carbon-carbon composite substrate. The composition includes at least one carrier fluid, at least one precursor of a phosphate glass, and a first plurality of filler nanoparticles having a mean aspect ratio of at least about 100. The carbon-carbon composite substrate is heated to a temperature sufficient to form an oxidation protection coating on the composite substrate from the applied oxidation inhibiting composition. The oxidation protection coating includes at least one phosphate glass barrier layer with a first plurality of filler nanoparticles dispersed through at least a portion thereof. At least some of the first plurality of filler nanoparticles comprise graphene nanoplatelets (GNPs), which typically have a mean thickness measuring less than about 20 nm, for example a mean thickness measuring between about 4 nm and about 8 nm.

BRIEF DESCRIPTION OF THE DRAWINGS

FIG. 1A schematically depicts an example aircraft wheel braking system.
FIG. 1B shows a portion the aircraft wheel braking system viewed through a wheel well.
FIG. 2 graphically illustrates results of testing comparing oxidation losses associated with different oxidation protection systems.

DETAILED DESCRIPTION

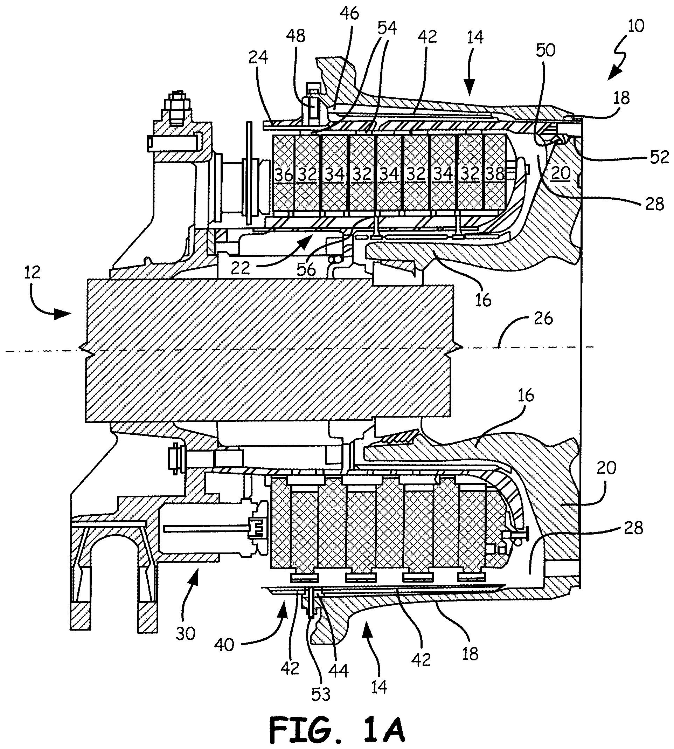

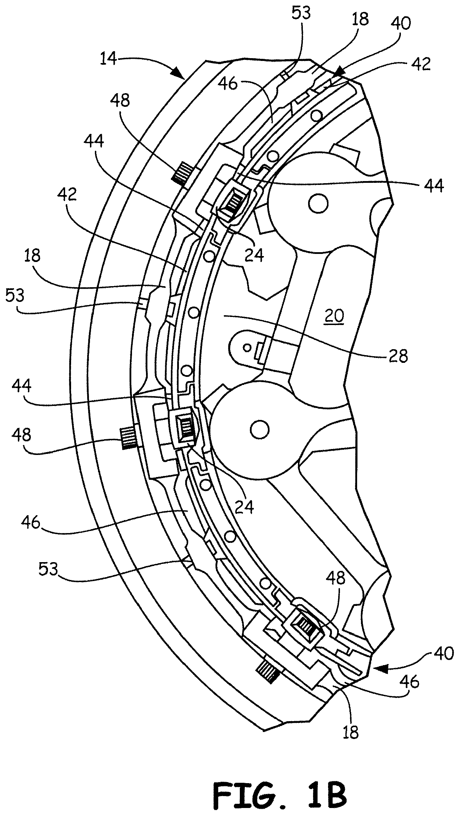

FIG. 1A is a sectional view of an example aircraft wheel braking system 10, and also includes bogie axle 12, wheel 14, hub 16, wheel well 18, web 20, torque take-out assembly 22, torque bars 24, wheel rotational axis 26, wheel well recess 28, actuator 30, brake rotors 32, brake stators 34, pressure plate 36, end plate 38, heat shield 40, heat shield sections 42, heat shield carriers 44, air gap 46, torque bar bolts 48, torque bar pin 50, wheel web hole 52, heat shield fasteners 53, rotor lugs 54, and stator slots 56. FIG. 1B shows a portion of system 10 viewed into wheel well 18 and wheel well recess 26.

FIGS. 1A and 1B show exemplary wheel and brake assembly 10, illustrating one possible application of compositions and methods for protecting composite articles from oxidation. Wheel and brake assembly 10 shown in FIGS. 1A and 1B is fully described in commonly assigned U.S. Pat. No. 7,051,845. Assembly 10 is shown mounted on bogie axle 12 with wheel 14 (only the inboard half of the wheel is shown in FIG. 1A) having hub 16 and concentric wheel well 18. Web 20 connects hub 16 to wheel well 18. Wheel 14 is rotatable relative to torque take-out assembly 22, which is aligned with hub 16. Torque bars 24 are fixed generally parallel to rotational axis 26 of wheel 14.

Brake disks (e.g., interleaved rotors 32 and stators 34) are disposed in recess 28 of wheel well 18. Rotors 32 are secured to torque bars 24 for rotation with wheel 14, while stators 34 are engaged with torque take-out assembly 22. At least one actuator 30 is operable to compress interleaved rotors 32 and stators 34 for stopping the aircraft. In this example, actuator 30 is shown as a hydraulically actuated piston, but many types of actuators are suitable, such as an electromechanical actuator. Pressure plate 36 and end plate 38 are disposed at opposite ends of the interleaved rotors 32 and stators 34. Rotors 32 and stators 34 can comprise any material suitable for friction disks, including ceramics or carbon materials, such as a carbon/carbon composite.

Through compression of interleaved rotors 32 and 34 between plates 36, 38, the resulting frictional contact slows rotation of wheel 14. Torque take-out assembly 22 is secured to a stationary portion of the landing gear truck such as a bogie beam or other landing gear strut (not shown), such that torque take-out assembly 22 and stators 34 are prevented from rotating during braking of the aircraft.

Carbon-carbon composites in the friction disks operate as a heat sink to absorb large amounts of kinetic energy converted to heat during slowing of the aircraft. Heat shield 40 reflects thermal energy away from wheel well 18 and back toward rotors 32 and stators 34. In FIG. 1A, a portion of wheel well 18 and torque bar 24 is removed to better show heat shield 40 and heat shield segments 42. As best seen in FIG. 1B, heat shield 40 is attached to wheel 14 and is concentric with wheel well 18. Individual heat shield sections 42 may be secured in place between wheel well 18 and rotors 32 by respective heat shield carriers 44 fixed to wheel well 18. Air gap 46 is defined annularly between heat shield segments 42 and wheel well 18.

Torque bars 24 and heat shield carriers 44 can be secured to wheel 14 using bolts or other fasteners. Torque bar bolts 48 can extend through a hole formed in a flange or other mounting surface on wheel 14 (as best shown in FIG. 1B). Each torque bar 24 can optionally include at least one pin 50 at an end opposite torque bar bolts 48, such that pin 50 can be received through hole 52 in web 20. Heat shield sections 42 and respective carriers 44 can then be fastened to wheel well 18 by heat shield fasteners 53.

In aircraft wheel braking systems, carbon-carbon composites have been used as an effective heat sink; however they are prone to material loss from oxidation of the carbon matrix. This includes catalytic oxidation on top of the inherent thermal oxidation caused by heating the composite as a part of its use. Composite rotors 32 and stators 34 may be heated to sufficiently high temperatures that may oxidize the carbon surfaces exposed to air. Since carbon composites may have residual open porosities of about 5% to 10%, infiltration of air and contaminants can occur. At elevated temperatures, these may cause internal oxidation and weakening, especially in and around brake rotor lugs 54 or stator slots 56 securing the friction disks to the respective torque bar 24 and torque take-out assembly 22. Since the composites can retain heat for a substantial time period after slowing the aircraft, and remain exposed to the ambient atmosphere, oxygen can react with the carbon matrix and/or carbon fibers to accelerate material loss. A specific association is damage caused by the oxidation enlargement of cracks around fibers, or enlargement of cracks in a reaction-formed porous barrier coating (e.g., a silicon-based barrier coating) applied to the carbon-carbon composite.

Elements identified in severely oxidized regions of a carbon-carbon composite brake assembly include potassium (K) and sodium (Na). These alkali contaminants may come into contact with aircraft brakes as part of cleaning or de-icing materials. Other sources include salt deposits left from seawater or sea spray. These and other contaminants (e.g. Ca, Fe, etc.) can penetrate and leave deposits in pores of carbon-carbon composite aircraft brakes, including the substrate and any reaction formed porous barrier coating. When such contamination occurs, the rate of carbon loss by oxidation can be increased by one to two orders of magnitude.

It has previously been described how phosphate-based oxidation protection systems (OPS) can reduce oxidation of composites particularly but not exclusively in aircraft braking systems. Examples of phosphate-based OPS methods and compositions are described in commonly assigned U.S. Patent Nos. 8,021,474; and 7,641,941; as well as pending U.S. Patent Application Serial No. 12/829,178 (U.S. Patent Application Publication No. 2010/0266770 A1). In the above-referenced patent specifications, it was described how conventional low aspect ratio particulates could be applied directly to the composite substrate surface, prior to applying an oxidation inhibition composition. These low aspect ratio particulates, such as metal oxides, metal carbides, and carbon black, were added either to a substrate pretreating composition for an optional undercoating, or as a separate slurry.

Different compositions and concentrations of low aspect ratio particulates can be used to mediate initial infiltration depth of a phosphate glass oxidation inhibition composition into residual pores in the substrate surface. After curing, the low aspect ratio particulates are generally locked in the pores beneath glass barrier coating layer(s) and any undercoating layer(s).

While somewhat effective at reducing contaminant infiltration, these low aspect ratio particulates do not sufficiently prevent contaminants from working their way through the open fissures forming and re-forming throughout the phosphate glass barrier layer(s). Many of these same conventional low aspect ratio particulates have been added to the phosphate glass barrier composition as well, but were found to be incompatible with the morphology and/or the chemistry of phosphate glass barrier layers. As such, low aspect ratio particulates have been found ineffective at migrating throughout an oxidation protection coating to maintain blockage of fissures as morphologies of the phosphate glass barrier layer(s) change during repeated thermal cycling in use.

The inventor has found that the addition of high aspect ratio filler nanoparticles, such as but not limited to graphene nanoplatelets (GNPs), can enhance performance of both a single step or layer, and a multi-step or layer OPS. High aspect ratio filler nanoparticles continually migrate into and bridge OPS fissures which constantly open, close, and re-form as the barrier is repeatedly heated and cooled during normal operation. Other nanoparticle shapes such as nanotubes or nanofibers with correspondingly large aspect ratios also should provide comparable performance to GNPs. Non-carbon nanomaterials with comparable particle morphologies can also be expected to function similarly in many phosphate glass based oxidation inhibiting compositions. Non-limiting examples of non-carbon nanomaterials include alumina ($Al_2O_3$) and boron nitride (BN) nanoparticles.

The following inventive methods and compositions may be used to treat composite articles useful in aircraft brakes and other applications. In the example of brakes, the components may reach temperatures in the range from about 100° C up to about 900° C, depending on whether the composite also includes a barrier coating between the phosphate glass barrier and the substrate. Much of the time, operating temperatures are ordinarily in the range from about 400° C to about 600° C. However, it will be recognized that the oxidation protection compositions and methods are readily adaptable to many parts in this and other braking systems, as well as to other composite articles susceptible to oxidation losses from infiltration of atmospheric oxygen and/or catalytic contaminants.

In certain embodiments, an oxidation inhibiting composition may be applied to non-wearing surfaces of a carbon-carbon composite. These non-wearing surfaces may be exposed to oxidation and can include the back face of end plates 36, 38, an inner diameter (ID) surface of stators 34 including slots 56, as well as outer diameter (OD) surfaces of rotors 32 including lugs 54. In certain of these embodiments, the oxidation inhibiting composition may be applied to preselected regions of a carbon-carbon composite that may be otherwise susceptible to oxidation. For example, aircraft brake disks can have the oxidation inhibiting composition applied on or proximate stator slots 56 and rotor lugs 54.

The use of GNPs have been found particularly helpful in the aircraft realm due to the operating temperatures and conditions aligning with the self-healing aspects and hydrolytic stability of phosphate glass barriers. The GNPs further improve oxidation protection by creating and maintaining a tortuous path for oxygen and catalysts through the resulting glass barrier coating layer(s) and optional undercoating layer(s). Since the GNPs can rearrange themselves along with the phosphate glass microstructure, a synergistic relationship is provided.

**Nanoparticle-Enhanced Oxidation Protection Composition and Coating**

A substantially pure filler additive having high aspect ratio nanoparticles can be incorporated into many phosphate glass compositions to enhance barriers to infiltration of oxygen and catalytic contaminants. Aspect ratios of nanoparticles depend on the exact particle morphology but is generally the ratio of a length dimension or diameter, relative to a height or thickness dimension. In the case of nanoplatelets, the aspect ratio of a particular nanoparticle is determined by the ratio of its diameter to its thickness. Synergistic effects between the filler nanoparticles and self-healing properties of many phosphate glass barrier coatings can further extend quality and effectiveness of oxidation protection. Testing has demonstrated less material loss attributable to oxidation beyond that which is seen by the addition of many other particulates to the phosphate glass barrier. Oxidation of the composite substrate is also reduced well beyond that which can be expected by previous phosphate glass barriers alone.

At least some of the first plurality of filler nanoparticles comprise graphene nanoplatelets (GNPs), which typically have a mean thickness measuring less than about 20 nm, for example a mean thickness measuring between about 4 nm and about 8 nm. In a further embodiment, at least some of the first plurality of filler nanoparticles can comprise one or more particle morphologies. Non-limiting examples of nanoparticle morphologies can include nanoplatelets, nanotubes, and/or nanofibers. Non-limiting examples of nanoparticle compositions can include carbon, alumina ($Al_2O_3$), and/or boron nitride (BN). In one example, the filler additives include graphene nanoplatelet (GNP) particles. Due to their high aspect ratio, GNPs have also been found to enhance the effectiveness of the OPS when added to the metal/phosphate undercoating as part of a pretreatment. Pretreatment may be coordinated with application of the oxidation inhibition composition as part of a two-phase treatment process.

An article can be provided with an oxidation protection coating including at least one glass barrier layer, and an optional undercoating disposed below the glass barrier layer. The glass barrier layer(s) can each have a first plurality of filler nanoparticles dispersed throughout. The filler nanoparticles can have a mean aspect ratio of at least about 100. At least some of the first plurality of dispersed filler nanoparticles are GNPs, which typically have a mean thickness measuring less than about 20 nm, for example a mean thickness measuring between about 4 nm and about 8 nm.

The example article also can have at least one optional phosphate undercoating layer beneath one or more of the glass barrier layer(s). In certain embodiments, total thickness of each phosphate glass barrier layer(s) is less than about 200 μm. One or more of the undercoating layers optionally include a second plurality of dispersed filler nanoparticles having an aspect ratio of at least about 100. In certain embodiments, the mean aspect ratio of each plurality of dispersed nanoparticles can be at least about 300. In certain of these embodiments, the mean aspect ratio can be at least about 600.

While specific example formulations and methods are described below, it will be appreciated that the compositions and methods can be adapted more broadly to other phosphate based OPS. Generally, examples of an oxidation inhibiting composition comprise at least one precursor of a phosphate glass and a plurality of dispersed high aspect ratio filler nanoparticles. In a related method, the composition can be applied to one or more surfaces of the carbon-carbon composite, which is then heated to a temperature sufficient to fuse the glass slurry, and adhere the composition to the substrate as one or more glass barrier layers. As explained below, the nanoparticles generally remain separate and do not agglomerate in the glass barrier layer(s). As such, they can be dispersed through fissures continually forming and re-forming in the barrier layer(s), forming a tortuous path for contaminants attempting to migrate through the fissures and reach the pores of a substrate and/or any porous reaction-formed barrier coating applied thereto.

In certain embodiments, phosphate glass, which may be acidic, can be formed as one or more precursors in the form of particulate solids prior to introduction onto the composite. These phosphate glass particulates, known as frit or glass frit, may be combined with a carrier fluid along with the filler nanoparticles. The particulate glass solids may have a mean particle size up to about 250 $\mu$m. In certain embodiments, the mean particle size of the particulate glass solids ranges from about 0.1 $\mu$m to about 50 $\mu$m. In certain of these embodiments, the mean particle size ranges from about 0.1 $\mu$m to about 20 $\mu$m. In yet certain of these embodiments the mean size ranges from about 2 $\mu$m to about 10 $\mu$m.

The phosphate glass precursors or frit can be based on phosphorus pentoxide ($P_2O_5$) or a precursor thereof. One or more alkali metal glass modifiers, one or more glass network modifiers and optionally one or more additional glass formers can be added to the $P_2O_5$. In certain embodiments, boron oxide or a precursor may optionally be combined with the $P_2O_5$ mixture to form a borophosphate glass, which has improved self-healing properties at the operating temperatures typically seen in aircraft braking systems. In certain of the above embodiments, the phosphate glass and/or borophosphate glass may be characterized by the absence of an oxide of silicon. In one embodiment, the ratio of $P_2O_5$ to metal oxide in the fused glass may be in the range from about 0.25 to about 5.

Potential alkali metal glass modifiers can be selected from oxides of lithium, sodium, potassium, rubidium, cesium, and mixtures thereof. In certain embodiments, the glass modifier can be an oxide of lithium, sodium, potassium, or mixtures thereof. These or other glass modifiers may function as fluxing agents. Additional glass formers can include oxides of boron, silicon, sulfur, germanium, arsenic, antimony, and mixtures thereof.

Suitable glass network modifiers include oxides of vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof.

The phosphate glass precursors or frit may be prepared by combining the above ingredients and heating them to a fusion temperature. In certain embodiments, depending on the particular combination of elements, the fusion temperature can be in the range from about 700° C to about 1500° C. The melt may then be cooled and pulverized to form the frit. In certain of these embodiments, the phosphate glass precursor can be annealed to a rigid, friable state prior to being pulverized. Glass transition temperature (Tg), glass softening temperature ($T_s$) and glass melting temperature ($T_m$) may be increased by increasing refinement time and/or temperature.

Before fusion, the phosphate glass precursor composition comprises from about 20 mol% to about 80 mol % of $P_2O_5$, or precursor thereof In certain of these embodiments, the phosphate glass precursor composition comprises from about 30 mol % to about 70 mol % $P_2O_5$, or precursor thereof. In yet certain of these embodiments, the phosphate glass precursor composition comprises from about 40 to about 60 mol % of $P_2O_5$, or precursor thereof.

The phosphate glass precursor composition can comprise from about 5 mol % to about 50 mol % of the alkali metal oxide or one or more precursors thereof. In certain of these embodiments, the phosphate glass precursor composition comprises from about 10 mol % to about 40 mol % of the alkali metal oxide or one or more precursors thereof. In yet certain of these embodiments, the phosphate glass precursor composition comprises from about 15 to about 30 mol % of the alkali metal oxide or one or more precursors thereof.

In certain embodiments, the phosphate glass precursor composition can comprise from about 0.5 mol % to about 50 mol % of one or more of the above-indicated glass formers, or one or more precursors thereof. In certain of these embodiments, the phosphate glass precursor composition comprises about 5 to about 20 mol % by weight of one or more of the above-indicated glass formers, or one or more precursors thereof.

In certain embodiments, the phosphate glass precursor composition can comprise from about 0.5 mol % to about 40 mol % of one or more of the above-indicated glass network modifiers. In certain of these embodiments, the phosphate glass precursor composition comprises from about 2.0 mol % to about 25 mol % of one or more of the above-indicated glass network modifiers, or one or more precursors thereof.

When the phosphate glass precursor is a borophosphate glass, the concentration of the boron oxide ($B_2O_3$) or precursor thereof can be in the range from about 1 mol % to about 15 mol %. In certain of these embodiments, the concentration of the boron oxide ($B_2O_3$) or precursor thereof can be in the range from about 2 to about 10 mol %,. In yet certain of these embodiments, the concentration of the boron oxide ($B_2O_3$) or precursor thereof can be in the range from about 4 mol % to about 8 mol % of the phosphate glass composition.

Generally, GNPs appear to improve performance in many phosphate glass barrier composition, where the phosphate glass precursor is represented by the formula:

$$a(A'_2O)_x \cdot (P_2O_5)_{y1} b(G_fO)_{y2} c(A''O)_z. \qquad [1]$$

In Formula 1, A' is selected from: lithium, sodium, potassium, rubidium, cesium, and mixtures thereof. $G_f$ is selected from: boron, silicon, sulfur, germanium, arsenic, antimony, and mixtures thereof. A'' is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof. a is a number in the range from 1 to about 5. b is a number in the range from 0 to about 10. c is a number in the range from 0 to about 30. x is a number in the range from about 0.050 to about 0.500. y1 is a number in the range from about 0.040 to about 0.950. y2 is a number in the range from 0 to about 0.20. z is a number in the range from about 0.01 to about 0.5. In addition, with regard to the individual variables, (x+y1+y2+z)=1, and x<(y1+y2). The glass composition is formulated to balance the reactivity, durability and flow of the resulting glass barrier layer for optimal performance.

In certain embodiments of Formula 1, $G_f$ includes boron, which greatly improves the durability of the glass OPS. The '178 application describes several specific examples of borophosphate glass compositions suitable for use. The high-aspect ratio filler nanoparticles can be introduced to various embodiments of the oxidation inhibition compositions to enhance blocking of atmospheric oxygen and/or catalytic contaminants as described below. Suitable examples of borophosphate glass precursors include, but are not limited to proprietary glass frit formulations of The Goodrich Corporation of Charlotte, North Carolina.

In certain embodiments, the nanoparticles can have a mean aspect ratio (diameter / height) of at least about 100 and a thickness less than about 20 nm. In certain of these embodiments, the nanoparticles can have a mean aspect ratio of at least about 600. In yet certain of these embodiments, the nanoparticles can have a mean aspect ratio of at least about 1000.

High aspect ratio filler nanoparticles can comprise carbon. In certain embodiments, the nanoparticles include graphene nanoplatelets (GNPs) which comprise a plurality of layers of exfoliated graphite. Two suitable non-limiting examples of commercially available GNPs include Grade M and Grade H particles from XG Sciences, Inc. of Lansing, Michigan. XG Sciences' Grade M particles have a typical surface area in a range between about 120 $m^2$/g and about 150 $m^2$/g. These Grade M particles have mean thickness between about 4 nm and about 8 nm, and mean diameters in a range between about 5 μm and about 25 μm. Thus, these particular examples then have a mean aspect ratio ranging from about 600 to about 6100. XG Sciences' Grade H particles have a mean thickness between about 14 nm and about 16 nm.

In certain embodiments, the weight ratio of high aspect ratio filler nanoparticles to phosphate glass particulate solids is in a range from about 10:1 to about 500:1. In certain of these embodiments, the weight ratio is in a range from about 100:1 to about 400:1. In yet certain of these embodiments, the weight ratio is in a range from about 150:1 to about 250:1.

The phosphate glass precursors and filler nanoparticles are combined in at least one carrier fluid to form a slurry. The carrier fluid may comprise water, a non-aqueous polar liquid, or a mixture thereof. The non-aqueous polar liquid may comprise an alcohol, an aldehyde, a ketone, a glycol, a polyglycol, a polyglycol ether, or mixtures thereof. The slurry can then be applied and adhered to the composite so as to provide an oxidation inhibiting barrier. The filler nanoparticles fill fissures otherwise occurring in the glass barrier layer, and provide a tortuous path for oxygen and contaminant elements attempting to reach the carbon-carbon composite substrate, thereby reducing the occurrence of oxidation reactions in the composite.

In addition to nanoparticles, phosphate glass precursors, the composition can be modified to include a metal/phosphate undercoat between the substrate and the glass barrier layer. As such, the oxidation inhibition composition can optionally be combined with at least one of: an ammonium and/or metal phosphate, a refractory compound, and/or a wetting agent.

In one embodiment, the phosphate glass slurry composition can be combined with at least one ammonium and/or metal phosphate, at least one refractory compound, and at least one wetting agent. In alternative embodiments, the ammonium and/or metal phosphate(s), the refractory compound(s), and the wetting agent(s) are combined into a separate pretreating composition which is applied and heated to adhere the pretreating composition to the composite substrate prior to application of the phosphate glass slurry composition. The added compounds form a metal/phosphate glass undercoating that penetrates pores of the composite substrate and remains in place to prevent further infiltration of oxygen and catalytic contaminants which somehow manage to penetrate the barrier coating layer(s).

Non-limiting examples of metal phosphates include magnesium phosphate, manganese phosphate, aluminum phosphate, zinc phosphate, and mixtures thereof. Non-limiting examples of ammonium phosphates include ammonium dihydrogen phosphate, ammonium hydrogen phosphate, and mixtures thereof. In certain embodiments, the metal phosphate comprises aluminum orthophosphate, monoaluminum phosphate (MALP), and mixtures thereof.

The refractory compound may comprise a refractory oxide, which may be in the form of a preformed crystalline phase. Non-limiting examples include aluminum orthophosphate, boron phosphate, manganese dioxide, an alkaline earth oxide such as magnesium oxide, an alkaline earth aluminum oxide such as magnesium aluminum oxide, zinc oxide, aluminum oxide, spinel, a substituted spinel, or a mixture of two or more thereof. Non-oxide ceramic compounds such as aluminum nitride, boron nitride, silicon carbide, boron carbide, silicon nitride, titanium boride, zirconium boride, and mixtures thereof can also be included. Elemental refractory compounds such as boron, silicon or phosphorus can also be included. Refractory compounds are added to the undercoating compound to intercept metal phosphate compositions also contained in the undercoating mixture, controlling depth of the undercoating and maintaining the protective metal phosphate nearer the substrate surface.

In certain embodiments, multiple layers of the oxidation protection composition can be added to the composite substrate. In certain of these embodiments, the composition of each layer can be either of the same composition or of a different composition. A layer with reduced flow or enhanced barrier properties may be desired with an additional layer with increased flow or sealant properties to extend the temperature range.

The wetting agent may be referred to as a surfactant and may comprise one or more polyols with two, three, or four hydroxyl groups. In certain embodiments, the polyol may be alkoxylated or may be a branched or unbranched acetylenic polyol. Non-limiting examples include dimethylhexynol, dimethyloctynediol, and tetramethyldecynediol, various forms of which are commercially available from Air Products & Chemicals, Inc. and sold under the trade designation Surfynol®. Suitable acetylenic polyols include Surfynol 104, Surfynol 420, Surfynol 440, Surfynol 465, and Surfynol 485.

Alternatively, the wetting agent comprises an alkoxylated monohydric alcohol. An example of a useful alkoxylated alcohol having between about 10 and about 18 carbon atoms includes Polytergent® SL-62, commercially available from Olin Corporation of East Alton, Illinois. In other alternative embodiments, the wetting agent may comprise a silicone surfactant.

**Nanoparticle-Enhanced Oxidation Reduction Method**

Once an oxidation inhibition composition is produced, it can then be used in a method to reduce oxidation of a carbon-carbon composite substrate. Generally, the method comprises applying an oxidation inhibiting composition to a surface of a carbon-carbon composite substrate. The composition includes at least one carrier fluid, at least one phosphate glass precursor, such as phosphate glass frit, and a first plurality of filler nanoparticles. The filler nanoparticles can have a mean aspect ratio of at least about 100. The carbon-carbon composite substrate is heated to a temperature sufficient to form an oxidation protection coating on the substrate. The oxidation protection coating includes at least one phosphate glass barrier layer with a first plurality of filler nanoparticles dispersed through at least a portion thereof. The first plurality of dispersed filler nanoparticles has a mean aspect ratio of at least about 100. At least some of the first plurality of filler nanoparticles comprise graphene nanoplatelets (GNPs), which typically have a mean thickness measuring less than about 20 nm, for example a mean thickness measuring between about 4 nm and about 8 nm.

Certain embodiments of the method comprise contacting or treating the carbon-carbon composite with an oxidation inhibiting composition, and then heating the composite at a temperature sufficient to deposit the composition in most or all of the pores of the composite surface(s) to be protected. A related method may be used to provide an extended service life for carbon-carbon composites by adhering the composition to the composite, thereby preventing or reducing oxidation in the composite, and in particular, reducing catalyst-accelerated oxidation.

Drying time and temperature are among the factors that may be controlled to determine the depth of penetration of the oxidation inhibiting composition in the carbon-carbon composite pores. The treated carbon-carbon composite may be heated, that is dried or baked, at a temperature in the range from about 200° C to about 1000° C. In certain of these embodiments, the composite is heated to a temperature in a range from about 600° C to about 1000° C. In alternative embodiments, this heating step may be conducted at a temperature in the range from about 200° C to about 900° C. In certain of these alternative embodiments, the temperature is in a range from about 400° C to about 850° C. The heating step may be conducted for a period from about 0.5 hour up to about 8 hours.

In certain embodiments, the composite may be heated to a first, lower temperature (for example, about 30° C to about 300° C) to bake or dry the oxidation inhibiting composition at a controlled depth. A second, higher temperature (for example, about 300° C to about 1000° C) may then be used to form a deposit from the oxidation inhibiting composition within the pores of the carbon-carbon composite. The duration of each heating step can be determined as a fraction of the overall heating time and can range from about 10% to about 50%. In certain embodiments, the duration of the lower temperature heating step(s) can range from about 20% to about 40% of the overall heating time. The lower temperature step(s) may occupy a larger fraction of the overall heating time, for example, due to a need to provide relatively slow heating up to and through the first lower temperature. This may be done in order to allow water and ammonia vapors to evolve and escape prior to the glass barrier layer(s) becoming too viscous. Thus the exact heating profile will depend on a combination of the first temperature and desired depth of the drying portion.

In certain embodiments, the carbon-carbon composite may be subjected to multiple treatment cycles. For example, from about 2 to about 4 treatment cycles may be used to produce a corresponding number of phosphate glass barrier coating layers.

The heating step may be performed in an inert environment, such as under a blanket of inert gas (e.g., nitrogen, argon, and the like). For example, a carbon-carbon composite may be pretreated or warmed prior to application of the oxidation inhibiting composition to aid in the penetration of the oxidation inhibiting composition. The heat treatment may be for a period of about 2 hours at a temperature of about 750° C to about 800° C. The treated carbon-carbon composite may be dried or baked in a non-oxidizing, inert atmosphere, e.g., nitrogen ($N_2$), to optimize the retention of the oxidation inhibitors in the pores. This retention may be improved by heating the carbon-carbon composite to about 200° C and maintaining the temperature for about 1 hour before heating the carbon-carbon composite to a temperature in the range described above. The temperature rise may be controlled at a rate that removes water without boiling, and provides temperature uniformity throughout the carbon-carbon composite.

An optional reaction-formed barrier coating may be applied to the carbon-carbon composite prior to the OPS. The barrier coating can be applied using any known method, including chemical vapor deposition (CVD), painting, spraying, molten application, and the like. In certain embodiments, a silicon-based coating can be prepared by CVD, which is then optionally brushed or sprayed onto a surface. One suitable non-limiting example is a silicon carbide coating, available commercially under the trade designation ZYP® COATING (grade SC) from ZYP Coatings, Inc. of Oak Ridge, Tennessee. The separate barrier coating may be baked to a temperature of about 650° C. In certain alternative embodiments, the barrier coating may be formed by treating the carbon-carbon composite with molten silicon, which is reactive to form a silicon carbide barrier coating prior to application of the oxidation protection composition. The optional barrier coating may be porous. Depth and porosity of the barrier coating can be controlled, for example, as described in the '474 patent.

Porous carbon-carbon composites can be treated with the oxidation inhibition composition whether or not a separate barrier coating has been applied to the composite beforehand. In embodiments where the separate barrier coating has not been applied, the oxidation inhibiting composition penetrates the pores of the carbon-carbon composite. In embodiments wherein the barrier coating has been applied, the oxidation inhibiting composition penetrates the pores of the barrier coating.

To mediate infiltration depth of the oxidation inhibiting composition, particulate material can be applied directly to the surface of the composite substrate prior to applying the oxidation inhibiting composition. These particulates generally have a low aspect ratio intended to fill in pores of the substrate and/or the optional barrier coating to reduce migration of phosphate moieties that break away from the phosphate glass network and would otherwise interfere with frictional properties of the composite brake component.

In certain embodiments, the particulate material is applied via a slurry with a carrier liquid. In certain alternative embodiments, the particulate material is mixed with the optional pretreating composition for forming one or more undercoating layer(s). In one example, the particulate slurry comprises an aluminum oxide (e.g., $Al_2O_3$), or an aluminum salt (e.g., aluminum phosphate, $AlPO_4$), suspended in water. The particulates can have a generally spherical and/or a variable morphology with a mean particle size in a range from about 10 nm to about 150 $\mu$m. Other examples of suitable particulate materials are described in the incorporated '178 application.

A pretreatment composition can optionally be added to the oxidation inhibition composition to form an undercoating later. As such, the oxidation inhibition composition can optionally be combined with at least one of: an ammonium and/or metal phosphate, a refractory compound, and a wetting agent prior to applying the oxidation inhibiting composition.

In one embodiment, the oxidation inhibition composition (e.g., phosphate glass slurry) can be combined with at least one ammonium and/or metal phosphate, at least one refractory compound, and at least one wetting agent. In alternative embodiments, the ammonium and/or metal phosphate(s), the refractory compound(s), and the wetting agent(s) are combined into a separate pretreating composition which is applied and heated to adhere the pretreating composition to the composite substrate prior to application of the oxidation inhibition composition. The added compounds form a metal/phosphate glass undercoating that penetrates pores of the composite substrate and remains in place to prevent further infiltration of oxygen and catalytic contaminants which somehow manage to penetrate the barrier coating layer(s).

## Examples

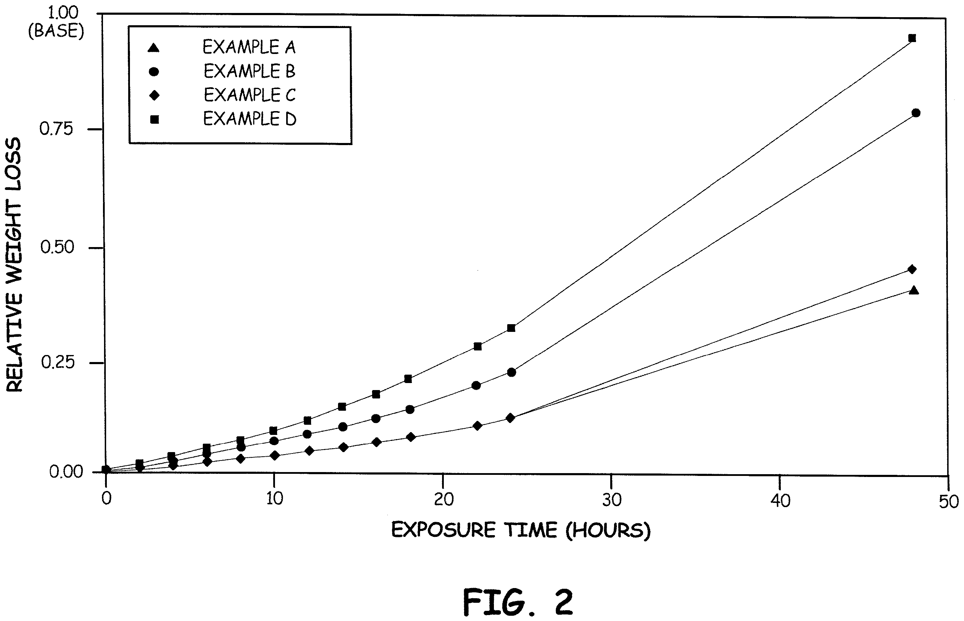

Various oxidation inhibition compositions nanoparticle with and without filler nanoparticles were applied to compare the effectiveness of different oxidation protection coatings on carbon-carbon composite test coupons. Example compositions tested are summarized in Table 1, and compared in FIG. 2.

Table 1: Example Oxidation Inhibition Compositions

| | Composition (parts by weight) | | | | |
|---|---|---|---|---|---|
| | Base | Ex. A | Ex. B | Ex. C | Ex. D |
| $H_2O$ | 20.00 | 20.00 | 20.00 | 20.00 | 20.00 |
| MALP | 20.00 | 20.00 | 20.00 | 20.00 | 20.00 |
| $H_3PO_4$ | 5.00 | 5.00 | 5.00 | 7.50 | 7.50 |
| $HNO_3$ | 0.00 | 0.00 | 0.00 | 0.25 | 0.25 |
| NaCl | 0.00 | 0.00 | 0.00 | 1.50 | 1.50 |
| $(NH_4)H_2PO_4$ | 2.00 | 2.00 | 2.00 | 2.00 | 2.00 |
| **Asbury 22**99 | 0.00 | 0.00 | **0.40** | 0.00 | **0.40** |
| **XGS M5 GNP** | 0.00 | **0.20** | 0.00 | **0.20** | 0.00 |
| **XGS M25 GNP** | 0.00 | **0.20** | 0.00 | **0.20** | 0.00 |
| $AlPO_4$ | 2.00 | 2.00 | 2.00 | 2.00 | 2.00 |
| Glass Frit | 43.00 | 43.00 | 43.00 | 43.00 | 43.00 |
| Total (pbw) | 92.00 | 92.40 | 92.40 | 96.65 | 96.65 |

The baseline composition begins as a slurry, which includes 43.00 parts by weight (pbw) glass frit, 20.00 pbw monoaluminum phosphate (MALP), 20.00 pbw water, 5.00 pbw phosphoric acid ($H_3PO_4$), 2.00 pbw ammonium dihydrogen phosphate (($NH_4)H_2PO_4$), and 2.00 pbw aluminum phosphate ($AlPO_4$). The slurry was applied to test coupons which were then heated under nitrogen at a temperature of 788°C (1450° F) for about two hours. For consistency and comparison purposes, the parts by weight do not add up to 100 for the above compositions. Thus the base slurry totals 92.00 pbw, with one or more additives provided in each of Examples A, B, C, and D.

The glass frit used in this comparison includes pulverized borophosphate glass comprising: a mixture of 80.74 wt % of ammonium dihydrogen phosphate, (($NH_4)H_2PO_4$), 3.44 wt % of boron hydroxide ($B(OH)_3$), 4.72 wt % of magnesium carbonate ($MgCO_3$), 2.78 wt % of barium carbonate ($BaCO_3$), and 8.30 wt % of lithium carbonate ($Li_2CO_3$). The constituents are combined, blended and ground to form a dry powder, which is fused under stepwise increasing temperatures. The final refinement stage is performed at 900° C for 4 hours. The resulting borophosphate glass is quenched and ground into a fine powder to form the frit.

Examples A and B are variations on the above baseline composition with the addition of two different carbon filler particles to the slurry. In Example A, 0.20 pbw of XG Sciences (XGS) M5 Series GNPs, along with 0.20 pbw of XGS M25 Series GNPs were added to the slurry. The M5 GNPs have mean nominal thickness of about 6 nm, and a mean diameter of about 5 μm, for a mean aspect ratio of about 800. The M25 GNPs also have nominal average thickness of about 6 nm, and a mean diameter of about 25 μm for a mean aspect ratio of about 4100. Example B utilizes an equal amount of carbon filler particles by weight (0.40 pbw). However, in Example B, the carbon is Asbury 2299 carbon black in place of GNPs. These particles have a mean diameter around 2.2 mm, and a mean aspect ratio of no more than about 3.

Examples C and D show the effects of GNPs on a slightly different oxidation inhibition composition. In both Examples C and D, the phosphoric acid composition is increased by 50% from the base composition, to a total of 7.50 pbw. In addition, 0.25 pbw of nitric acid ($HNO_3$), and 1.50 pbw of magnesium chloride ($MgCl_2$) are added to the slurry. Like Example A, Example C also has 0.20 pbw of XGS M5 Series GNPs, along with 0.20 pbw of XGS M25 Series GNPs. Like Example B, Example D has an equal amount by weight (0.40 pbw) of Asbury 2299 carbon black in place of the GNPs.

FIG. 2 compares testing results and shows relative oxidation losses in the example phosphate glass OPS compositions. The samples were immersed in a 25% potassium formate solution and oxidized at 550° C (1022° F). The test coupons were weighed to determine oxidation losses at various time increments shown along the x-axis. FIG. 2 shows that a composite test coupon coated with the Example A composition (containing graphene nanoplatelets) experienced about a 50% reduction (from 0.95 to 0.45) in thermal oxidation losses, as compared to the Example B composition (containing carbon black). Similarly, a composite test coupon coated with the Example C composition (containing graphene nanoplatelets) also experienced about a 50% reduction (from 0.80 to 0.40) in thermal oxidation losses, as compared to the Example D composition (containing carbon black). Though not shown in FIG. 2, it should be noted that the addition of carbon black only slightly lowered thermal oxidation losses as compared to the baseline with no particulate material added to the phosphate glass barrier layer.

Though the GNPs have a smaller relative surface area as compared to Asbury 2299, they exhibit better performance (e.g., reducing catalytic oxidation) relative to glass OPS with other carbon-based particulates. As noted above, carbon black has high surface area and corresponding reactivity with oxygen, which provides a small benefit as a sacrificial reactant. However, these micrometer-scale carbon black particles also have a relatively low aspect ratio of diameter to height (on the order of 10 or less), and thus have correspondingly minimal effect on blocking oxygen and/or catalytic contaminants from penetrating the phosphate glass barrier layer(s) into the substrate. The carbon black particles agglomerate, and thus are not able to easily reorient themselves in the glass barrier coating during thermal cycling of the article. Thus they remain relatively static, even when new fissures have formed in the glass barrier.

In contrast, these high aspect ratio nanoparticles do not agglomerate, and instead are able to reorient themselves along with morphing of the phosphate glass barrier layer(s), remaining lodged in new and reformed fissures which open and close due to thermal cycling. Without intending to be bound by a particular theory, inventors believe this occurs because the graphene nanoplatelets, and other nanoparticles with similar morphology, have nanometer-scale thickness resulting from stacking a very small number of atomic layers, helping the nanoplatelets to conform better to the fissures where environmental oxygen might otherwise penetrate. Since the carbon is impermeable to oxygen, the GNPs or other high aspect ratio filler nanoparticles create a tortuous path for contaminant intrusion through the phosphate glass barrier layer(s) into the composite. This creates a synergistic effect with certain phosphate OPS systems due to the lower melting temperatures and improving self-healing properties.

The composition above describes applying both the glass barrier layer and the undercoating as a single composition in the form of a slurry. However, it will be appreciated that the undercoating may be applied using a second separate metal/phosphate composition as a pretreatment prior to adhering the phosphate glass slurry. In that example, the slurry contains phosphate glass precursors or frit, along with the filler nanoparticles and a carrier fluid. Prior to the slurry, a separate phosphoric acid composition can generally comprise: water, a nonaqueous polar liquid, or a mixture thereof; phosphoric acid or an acid phosphate salt; an aluminum salt; and at least one additional metal salt. Specific examples of the metal/phosphate undercoating are described in the '474 patent.

The '474 patent also describes a phosphoric acid based composition and method. It has also been found that GNPs and other high aspect ratio filler nanoparticles have a beneficial effect on the oxidation resistance afforded by these compositions. The oxidation resistance is enhanced whether the composition is applied prior to the slurry of glass frit, or alternatively, even when the glass frit is not applied at all. Thus similar amounts of GNPs or other filler nanoparticles with aspect ratios of at least about 100 can be added to the compositions disclosed in the '474 patent.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1.  A composition comprising:

    a carrier fluid;
    precursors of a phosphate glass; and
    a first plurality of filler nanoparticles having a mean aspect ratio of at least 100,

    **characterized in that** at least some of the first plurality of filler nanoparticles comprise graphene nanoplatelets (GNPs).

2.  The composition of claim 1, wherein the precursors of the phosphate glass comprise particulate glass solids.

3.  The composition of claim 1 or claim 2, further comprising at least one of: an ammonium phosphate salt, a metal phosphate salt, a refractory compound, and a wetting agent.

4.  An article such as a component of an aircraft wheel braking system comprising:

    a carbon-carbon composite substrate; and
    an oxidation protection coating including a phosphate glass barrier layer with a first plurality of filler nanoparticles dispersed through at least a portion of the phosphate glass barrier layer, the first plurality of dispersed filler nanoparticles having a mean aspect ratio of at least 100,

**characterized in that** at least some of the first plurality of filler nanoparticles comprise graphene nanoplatelets (GNPs).

5. The article of claim 4, wherein the oxidation protection coating includes a plurality of phosphate glass barrier layers, each layer of the plurality of phosphate glass barrier layers having the first plurality of dispersed filler nanoparticles.

6. The article of claim 4 or claim 5, further comprising at least one phosphate undercoating layer beneath said glass barrier layer.

7. A method for limiting a catalytic oxidation reaction in a composite substrate, the method comprising:

applying an oxidation inhibiting composition to a surface of a carbon-carbon composite substrate, the oxidation inhibiting composition including at least one carrier fluid, at least one precursor of a phosphate glass, and a first plurality of filler nanoparticles, the first plurality of filler nanoparticles having a mean aspect ratio of at least 100; and

heating the carbon-carbon composite substrate to a temperature sufficient to form an oxidation protection coating on the composite substrate from the applied oxidation inhibiting composition, the oxidation protection coating including at least one phosphate glass barrier layer with a first plurality of filler nanoparticles dispersed through at least a portion thereof, the first plurality of dispersed filler nanoparticles having a mean aspect ratio of at least 100,

**characterized in that** at least some of the first plurality of filler nanoparticles comprise graphene nanoplatelets (GNPs).

8. The method of claim 7, wherein the oxidation inhibiting composition also includes one or more of: (i) an ammonium phosphate, (ii) a metal phosphate, (iii) a refractory compound, and (iv) a wetting agent.

9. The method of claim 7 or claim 8, further comprising:
prior to the step of applying the oxidation inhibiting composition, applying a particulate material (for example a particulate material suspended in a slurry) directly to the surface of the composite substrate, wherein the particulate material may comprise a plurality of aluminum oxide ($Al_2O_3$) particulates.

10. The method of any of claims 7-9, further comprising:

prior to the step of applying the oxidation inhibiting composition, applying a pretreatment composition directly to the surface of the composite substrate, in particular wherein the pretreatment composition comprises:
one or more of: an ammonium phosphate and a metal phosphate;
a refractory compound;
optionally a plurality of aluminum oxide ($Al_2O_3$) particulates;
optionally a second plurality of filler nanoparticles having a mean aspect ratio of at least 100; and
a wetting agent.

11. The composition, article or method of any preceding claim, wherein at least some of the first plurality of filler nanoparticles comprise a morphology selected from one or more of: nanoplatelets, nanotubes, and nanofibers.

12. The composition, article or method of any preceding claim, wherein at least some of the plurality of filler nanoparticles comprise a composition selected from one or more of: carbon, alumina ($Al_2O_3$), and boron nitride (BN).

13. The composition, article or method of any preceding claim, wherein the phosphate glass is represented by the formula $a(A'_2O)_x \cdot (P_2O_5)_{y1}b(G_fO)_{y2}c(A''O)_z$:

A' is selected from: lithium, sodium, potassium, rubidium, cesium, and mixtures thereof;
$G_f$ is selected from: boron, silicon, sulfur, germanium, arsenic, antimony, and mixtures thereof;
A'' is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
a is a number in the range from 1 to 5;
b is a number in the range from 0 to 10;

c is a number in the range from 0 to 30;
x is a number in the range from about 0.050 to 0.500;
y1 is a number in the range from about 0.040 to 0.950;
y2 is a number in the range from 0 to 0.20; and
z is a number in the range from 0.01 to 0.5;

$$(x+y1+y2+z)=1;$$

and

$$x<(y1+y2).$$

**14.** The composition, article or method of claim 13, wherein $G_f$ comprises boron.

**15.** The composition, article or method of any preceding claim, wherein said first plurality of filler nanoparticles has a mean aspect ratio of at least 300 or at least 600 and/or said graphene nanoplatelets (GNPs) have a mean thickness measuring less than 20 nm or between 4 nm and 8 nm.

**Patentansprüche**

**1.** Zusammensetzung, umfassend:

ein Trägerfluid;
Vorläuferstoffe eines Phosphatglases; und
eine erste Vielzahl von Füller-Nanopartikeln mit einem mittleren Aspektverhältnis von mindestens 100,
**dadurch gekennzeichnet, dass** mindestens einige der ersten Vielzahl von Füller-Nanopartikeln Graphen-Nanoplättchen (graphene nanoplatelets, GNPs) umfassen.

**2.** Zusammensetzung nach Anspruch 1, wobei die Ausgangsstoffe des Phosphatglases partikelförmige Glasfeststoffe umfassen.

**3.** Zusammensetzung nach Anspruch 1 oder 2, ferner umfassend mindestens eines der Folgenden: ein Ammoniumphosphatsalz, ein Metallphosphatsalz, eine hitzebeständige Verbindung und ein Benetzungsmittel.

**4.** Artikel, wie beispielsweise eine Komponente eines Flugzeugrad-Bremssystems, umfassend:

ein Kohlenstoff-Kohlenstoff-Verbundsubstrat; und
eine Oxidationsschutzbeschichtung enthaltend eine Phosphatglas-Sperrschicht mit einer ersten Vielzahl von Füller-Nanopartikeln, die durch mindestens einen Abschnitt der Phosphatglas-Sperrschicht dispergiert sind, wobei die erste Vielzahl von dispergierten Füller-Nanopartikeln ein mittleres Aspektverhältnis von mindestens 100 hat,
**dadurch gekennzeichnet, dass** mindestens einige der Vielzahl von Füller-Nanopartikeln Graphen-Nanoplättchen (graphene nanoplatelets, GNPs) umfassen.

**5.** Artikel nach Anspruch 4, wobei die Oxidationsschutzbeschichtung eine Vielzahl von Phosphatglas-Sperrschichten enthält, wobei jede Schicht der Vielzahl von Phosphatglas-Sperrschichten die erste Vielzahl von dispergierten Füller-Nanopartikeln hat.

**6.** Artikel nach Anspruch 4 oder Anspruch 5, ferner umfassend mindestens eine Phosphat-Unterbodenschutz unter der Glassperrschicht.

**7.** Verfahren zum Begrenzen einer katalytischen Oxidationsreaktion in einem Verbundsubstrat, wobei das Verfahren Folgendes umfasst:

Auftragen einer oxidationshemmenden Zusammensetzung auf eine Oberfläche eines Kohlenstoff-Kohlenstoff-Verbundsubstrats, wobei die oxidationshemmende Zusammensetzung mindestens ein Trägerfluid, mindestens einen Ausgangsstoff eines Phosphatglases und eine erste Vielzahl von Füller-Nanopartikeln enthält, wobei die erste Vielzahl von Füller-Nanopartikeln ein mittleres Aspektverhältnis von mindestens 100 hat; und

Erhitzen des Kohlenstoff-Kohlenstoff-Verbundsubstrats auf eine Temperatur, die ausreichend ist, um eine Oxidationsschutzbeschichtung auf dem Verbundsubstrat aus der angewendeten oxidationshemmenden Zusammensetzung zu bilden, wobei die Oxidationsschutzbeschichtung mindestens eine Phosphatglas-Sperrschicht mit einer ersten Vielzahl von Füller-Nanopartikeln enthält, die durch mindestens einen Abschnitt davon dispergiert sind, wobei die erste Vielzahl von dispergierten Füller-Nanopartikeln ein mittleres Aspektverhältnis von mindestens 100 hat;

**dadurch gekennzeichnet, dass** mindestens einige der Vielzahl von Füller-Nanopartikeln Graphen-Nanoplättchen (graphene nanoplatelets, GNPs) umfassen.

8. Verfahren nach Anspruch 7, wobei die oxidationshemmende Zusammensetzung auch eines oder mehrere der Folgenden enthält: (i) ein Ammoniumphosphatsalz, (ii) ein Metallphosphatsalz, (iii) eine refraktäre Verbindung und (iv) ein Benetzungsmittel.

9. Verfahren nach Anspruch 7 oder Anspruch 8, ferner umfassend:
vor dem Schritt eines Anwendens der oxidationshemmenden Zusammensetzung ein Anwenden eines partikelförmigen Materials (beispielsweise ein partikelförmiges Material, das in einer Aufschlämmung suspendiert ist) direkt auf die Oberfläche des Verbundsubstrats, wobei das partikelförmige Material eine Vielzahl von Aluminiumoxid-Partikeln ($Al_2O_3$-Partikel) umfassen kann.

10. Verfahren nach einem der Ansprüche 7-9, ferner umfassend:
vor dem Schritt eines Anwendens der oxidationshemmenden Zusammensetzung ein Anwenden einer Vorbehandlungszusammensetzung direkt auf die Oberfläche des Verbundsubstrats, besonders wobei die Vorbehandlungszusammensetzung umfasst:

eines oder mehrere der Folgenden: ein Ammoniumphosphat und ein Metallphosphat;
eine refraktäre Verbindung;
optional eine Vielzahl von Aluminiumoxid-Partikeln ($Al_2O_3$-Partikel);
optional eine zweite Vielzahl von Füller-Nanopartikeln mit einem mittleren Aspektverhältnis von mindestens 100; und
ein Benetzungsmittel.

11. Zusammensetzung, Artikel oder Verfahren nach einem vorherigen Anspruch, wobei mindestens einige der ersten Vielzahl von Füller-Nanopartikeln eine Morphologie umfassen, ausgewählt aus einem oder mehreren der Folgenden: Nanoplättchen, Nanoröhrchen und Nanofasern.

12. Zusammensetzung, Artikel oder Verfahren nach einem vorherigen Anspruch, wobei mindestens einige der Vielzahl von Füller-Nanopartikeln eine Zusammensetzung umfassen, ausgewählt aus einem oder mehreren der Folgenden: Kohlenstoff. Aluminiumoxid ($Al_2O_3$) und Bornitrid (BN).

13. Zusammensetzung, Artikel oder Verfahren nach einem vorherigen Anspruch, wobei das Phosphatglas durch die Formel $a(A'_2O)_x \cdot (P_2O_5)_{y1} b(G_fO)_{y2} c(A''O)_z$ dargestellt ist;
A' ausgewählt ist aus: Lithium, Natrium, Kalium, Rubidium, Cäsium und Gemischen davon;
$G_f$ ausgewählt ist aus: Bor, Silizium, Schwefel, Germanium, Arsen, Antimon und Gemischen davon;
A" ausgewählt ist aus: Vanadium, Aluminium, Zinn, Titan, Chrom, Mangan, Eisen, Kobalt, Nickel, Kupfer, Quecksilber, Zink, Thulium, Blei, Zirkon, Lanthan, Cerium, Praseodym, Neodym, Samarium, Europium, Gadolinium, Terbium, Dysprosium, Holmium, Erbium, Thulium, Ytterbium, Actinium, Thorium, Uran, Yttrium, Gallium, Magnesium, Calcium, Strontium, Barium, Zinn, Wismut, Kadmium und Gemischen davon;
a ist eine Ziffer im Bereich von 1 bis 5;
b ist eine Ziffer im Bereich von 0 bis 10;
c ist eine Ziffer im Bereich von 0 bis 30;
x ist eine Ziffer im Bereich von ca. 0,050 bis 0,500;
y1 ist eine Ziffer im Bereich von ca. 0,040 bis 0,950;
y2 ist eine Ziffer im Bereich von 0 bis 0,20; und
z ist eine Ziffer im Bereich von 0,01 bis 0,5;

$$(x+y1+y2+z)=1;$$

und

$$X<(y1+y2).$$

**14.** Zusammensetzung, Artikel oder Verfahren nach Anspruch 13, wobei $G_f$ Bor umfasst.

**15.** Zusammensetzung, Artikel oder Verfahren nach einem vorherigen Anspruch, wobei die erste Vielzahl von Füller-Nanopartikeln ein mittleres Aspektverhältnis von mindestens 300 oder mindestens 600 hat und/oder die Graphen-Nanoplättchen (graphene nanoplatelets, GNPs) eine mittlere Stärke von weniger als 20 nm oder zwischen 4 nm und 8 nm haben.

**Revendications**

**1.** Composition comprenant :

un fluide de support ;
des précurseurs d'un verre de phosphate ; et
une première pluralité de nanoparticules de charge ayant un rapport hauteur/largeur moyen d'au moins 100,

**caractérisée en ce qu'**au moins certaines de la première pluralité de nanoparticules de charge comprennent des nanoplaquettes de graphène (GNP).

**2.** Composition selon la revendication 1, dans laquelle les précurseurs du verre de phosphate comprennent des solides de verre particulaire.

**3.** Composition selon la revendication 1 ou la revendication 2, comprenant également au moins l'un : d'un sel de phosphate d'ammonium, d'un sel de phosphate de métal, d'un composé réfractaire et d'un agent mouillant.

**4.** Pièce telle qu'un composant d'un système de freinage de roue d'avion, comprenant :

un substrat composite carbone-carbone ; et
un revêtement de protection contre l'oxydation comprenant une couche de barrière de verre de phosphate avec une première pluralité de nanoparticules de charge dispersée à travers au moins une partie de la couche de barrière de verre de phosphate, la première pluralité de nanoparticules de charge dispersée ayant un rapport hauteur/largeur moyen d'au moins 100, **caractérisée en ce qu'**au moins certaines de la première pluralité de nanoparticules de charge comprennent des nanoplaquettes de graphène (GNP).

**5.** Pièce selon la revendication 4, dans laquelle le revêtement de protection contre l'oxydation comprend une pluralité de couches de barrière de verre de phosphate, chaque couche de la pluralité de couches de barrière de verre de phosphate ayant la première pluralité de nanoparticules de charge dispersée.

**6.** Pièce selon la revendication 4 ou la revendication 5, comprenant également au moins une couche de sous-couche de phosphate en dessous de ladite couche de barrière de verre.

**7.** Procédé de limitation d'une réaction d'oxydation catalytique dans un substrat composite, le procédé comprenant :

l'application d'une composition d'inhibition de l'oxydation à une surface d'un substrat composite carbone-carbone, la composition d'inhibition de l'oxydation comprenant au moins un fluide de support, au moins un précurseur d'un verre de phosphate et une première pluralité de nanoparticules de charge, la première pluralité de nanoparticules de charge ayant un rapport hauteur/largeur moyen d'au moins 100 ; et
le chauffage du substrat composite carbone-carbone à une température suffisante pour former un revêtement de protection contre l'oxydation sur le substrat composite à partir de la composition d'inhibition de l'oxydation appliquée, le revêtement de protection contre l'oxydation comprenant au moins une couche de barrière de verre de phosphate avec une première pluralité de nanoparticules de charge dispersée à travers au moins une partie de celui-ci, la première pluralité de nanoparticules de charge dispersée ayant un rapport hauteur/largeur moyen d'au moins 100,

**caractérisée en ce qu'**au moins certaines de la première pluralité de nanoparticules de charge comprennent des nanoplaquettes de graphène (GNP).

8. Procédé selon la revendication 7, dans lequel la composition d'inhibition de l'oxydation comprend également l'un ou plusieurs : (i) d'un sel de phosphate d'ammonium, (ii) d'un sel de phosphate de métal, (iii) d'un composé réfractaire et (iv) d'un agent mouillant.

9. Procédé selon la revendication 7 ou la revendication 8, comprenant également :
avant l'étape d'application de la composition d'inhibition de l'oxydation, l'application d'un matériau particulaire (par ex., un matériau particulaire suspendu dans une suspension) directement à la surface du substrat composite, dans lequel le matériau particulaire peut comprendre une pluralité de particules d'oxyde d'aluminium (Al$_2$O$_3$).

10. Procédé selon l'une quelconque des revendications 7 à 9, comprenant :

avant l'étape d'application de la composition d'inhibition de l'oxydation, l'application d'une composition de prétraitement directement à la surface du substrat composite, en particulier dans lequel la composition de prétraitement comprend :
un ou plusieurs : d'un phosphate d'aluminium et d'un phosphate de métal ; d'un composé réfractaire ;
éventuellement une pluralité de particules d'oxyde d'aluminium (Al$_2$O$_3$) ;
éventuellement une seconde pluralité de nanoparticules de charge ayant un rapport hauteur/largeur moyen d'au moins 100 ; et
un agent mouillant.

11. Composition, pièce ou procédé selon une quelconque revendication précédente, dans lequel au moins certaines de la première pluralité de nanoparticules de charge comprennent une morphologie choisie parmi l'un ou plusieurs de : nanoplaquettes, nanotubes et nanofibres.

12. Composition, pièce ou procédé selon une quelconque revendication précédente, dans lequel au moins certaines de la pluralité de nanoparticules de charge comprennent une composition choisie parmi l'un ou plusieurs : de carbone, d'alumine (Al$_2$O$_3$) et de nitrure de bore (BN).

13. Composition, pièce ou procédé selon une quelconque revendication précédente, dans lequel le verre de phosphate est représenté par la formule a(A'$_2$O)$_x$.(P$_2$O$_5$)$_{y1}$b(G$_f$O)$_{y2}$c(A"O)$_z$ :

A' est choisi parmi : lithium, sodium, potassium, rubidium, césium et des mélanges de ceux-ci ;
G$_f$ est choisi parmi : bore, silicium, soufre, germanium, arsénique antimoine, et des mélanges de ceux-ci ;
A" est choisi parmi : vanadium, aluminium, étain, titane, chrome, manganèse, fer, cobalt, nickel, cuivre, mercure, zinc, thulium, plomb, zirconium, lanthane, cérium, praséodyme, néodyme, samarium, europium, gadolinium, terbium, dysprosium, holmium, erbium, thulium, ytterbium, actinium, thorium, uranium, yttrium, gallium, magnésium, calcium, strontium, baryum, étain, bismuth, cadmium, et des mélanges de ceux-ci ;
a est un nombre dans la fourchette de 1 à 5 ;
b est un nombre dans la fourchette de 0 à 10 ;
c est un nombre dans la fourchette de 0 à 30 ;
x est un nombre dans la fourchette d'environ 0,050 à 0,500 ;
y1 est un nombre dans la fourchette d'environ 0,040 à 0,950 ;
y2 est un nombre dans la fourchette de 0 à 0,20 ; et
z est un nombre dans la fourchette de 0,01 à 0,5 ;

$$(x+y1+y2+z)=1 \; ;$$

et

$$x<(y1+y2).$$

**14.** Composition, pièce ou procédé selon la revendication 13, dans lequel $G_f$ comprend le bore.

**15.** Composition, pièce ou procédé selon une quelconque revendication précédente, dans lequel ladite première pluralité de nanoparticules de charge a un rapport hauteur/largeur moyen d'au moins 300 ou d'au moins 600 et/ou lesdites nanoplaquettes de graphène (GNP) ont une épaisseur moyenne mesurant moins de 20 nm ou entre 4 et 8 nm.

FIG. 1A

FIG. 1B

FIG. 2

EP 2 767 529 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7051845 B
- US 8021474 B
- US 7641941 B
- US 829178 A
- US 20100266770 A1